(19) Europäisches Patentamt
European Patent Office
Office européen des brevets

(11) **EP 3 477 218 B1**

(12) **EUROPEAN PATENT SPECIFICATION**

(45) Date of publication and mention
of the grant of the patent:
**27.05.2020 Bulletin 2020/22**

(51) Int Cl.:
*F24H 9/20* *(2006.01)*          *F24D 19/10* *(2006.01)*
*G05D 23/19* *(2006.01)*

(21) Application number: **16907131.3**

(86) International application number:
**PCT/CN2016/109541**

(22) Date of filing: **12.12.2016**

(87) International publication number:
**WO 2018/000742 (04.01.2018 Gazette 2018/01)**

(54) **WATER HEATER AND WATER TEMPERATURE SETTING METHOD AND DEVICE THEREFOR**

WASSERERHITZER UND WASSERTEMPERATUREINSTELLVERFAHREN UND VORRICHTUNG DAFÜR

CHAUFFE-EAU ET PROCÉDÉ ET DISPOSITIF ASSOCIÉS DE RÉGLAGE DE TEMPÉRATURE D'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2016 CN 201610503414**

(43) Date of publication of application:
**01.05.2019 Bulletin 2019/18**

(73) Proprietors:
• **GD Midea Heating & Ventilating Equipment Co., Ltd.**
**Foshan, Guangdong 528311 (CN)**
• **Midea Group Co., Ltd.**
**Foshan, Guangdong 528311 (CN)**

(72) Inventor: **LUO, Mingwen**
**Foshan**
**Guangdong 528311 (CN)**

(74) Representative: **Lam, Alvin**
**Maucher Jenkins**
**26 Caxton Street**
**London SW1H 0RJ (GB)**

(56) References cited:
EP-A1- 2 913 596          WO-A1-2009/087811
CN-A- 101 900 419          CN-A- 101 900 419
CN-A- 104 713 241          CN-A- 105 115 162
CN-A- 105 115 162          CN-A- 106 052 141
JP-A- H07 305 842          US-A1- 2006 124 629
US-A1- 2015 204 580

**Description**

**FIELD**

The present disclosure relates to a technical field of water heaters, and more particularly, to a water heater and a method and device for setting a water temperature thereof.

**BACKGROUND**

As the concept of intelligent household appliances is proposed, users are increasingly demanding on intellectualization of household appliances, including intellectualization of water temperature setting of water heaters. For example, it is required that a water heater can adjust the water temperature setting automatically to satisfy the need for hot water and save energy at the same time.

In the related art, water temperature setting solutions for water heaters are simple, which usually allows a user to set the water temperature within a temperature range and defaults to a set temperature when initially powered on. If the user does not manually adjust the set temperature, the water heater will always take control at the default set temperature. Such solutions can be easily implemented, but when the season varies and the user's demand for hot water changes, the user has to make manual adjustment. Otherwise, the user's comfort will be affected if the water temperature is too low, or energy waste will be caused if the water temperature is too high.

US2006/124629A1 relates to a water heater control system that can be programmed by a user to go on and off at predetermined times and maintain temperatures below normal usage temperatures. The water heater control system may also program itself based on usage of the hot water by users. WO2009/087811 relates to a heat pump hot water supply apparatus with control based on current ambient temperature and historical date of used hot water. US 2015/204580 A1 relates to boiler control based on historical ambient temperature data.

**SUMMARY**

In accordance with the present invention, there is provided a method for setting a water temperature for a water heater as set out in claim 1 and a device for setting a water temperature for a water heater as set out in claim 8. Other aspects of the invention can be found in the dependent claims.

Embodiments of the present application aim to solve at least one of the technical problems existing in the related art. Accordingly, one objective of the present application is to propose a method for setting a water temperature for a water heater, whereby the water temperature setting of the water heater can be adjusted according to a variation in the ambient temperature, or can be adjusted according to water demand of a user, or can be adjusted according to both of the ambient temperature variation and the user's water demand. Thus, the user's water demand can be satisfied at the same time of achieving a purpose of energy saving.

Another objective of the present application is to propose a device for setting a water temperature for a water heater.

Still another objective of the present application is to propose a water heater having the above both of the ambient temperature variation and the user's water demand. Thus, the user's water demand can be satisfied at the same time of achieving the purpose of energy saving.

The method for setting the water temperature according to the above embodiments of the present application further can have the following technical features.

According to an embodiment of the present application, the first variation is negatively correlated to the temperature difference value.

In this embodiment, specifically, if the ambient temperature of the current day is higher than the ambient temperature of the previous day (i.e., the temperature difference value is relatively great), the first variation based on the water temperature setting on the previous day may be relatively small, and for example, may be negative, such that the water temperature setting on the current day is lower than the water temperature setting on the previous day. If the ambient temperature of the current day just changes slightly compared to the ambient temperature of the previous day (i.e., the temperature difference value is basically zero), the first variation based on the water temperature setting on the previous day can be null, and for example, may be zero, such that the water temperature setting on the current day is equal to the water temperature setting on the previous day. If the ambient temperature of the current day is lower than the ambient temperature of the previous day (i.e., the temperature difference value is relatively small), the first variation based on the water temperature setting on the previous day may be relatively great, such that the water temperature setting on the current day is higher than the water temperature setting on the previous day.

According to an embodiment of the present application, determining the first variation in the water temperature setting of the water heater according to the temperature difference value between the ambient temperature of the current day and the ambient temperature of the previous day, specifically includes: determining the first variation as M1 when the temperature difference value is smaller than a first set value; determining the first variation as N1 when the temperature difference value is greater than or equal to the first set value and smaller than a second set value; and determining the first variation as P1 when the temperature difference value is greater than or equal to the second set value, in which $P1 < N1 < M1$.

As a non-limiting embodiment of the present application, if the first set value may be -8°C, and the second set value may be 6°C, M1 may be 1°C, N1 may be 0°C, and P1 may be -1°C. That is, the first variation is negatively correlated to the temperature difference value.

According to an embodiment of the present application, the second variation is positively correlated to the amount of hot water used on the previous day.

In this embodiment, specifically, if the amount of hot water used on the previous day is large, it indicates that the user has a great demand for hot water, and hence the second variation on the basis of the water temperature setting on the previous day can be great to make the water temperature setting on the current day higher than the water temperature setting on the previous day, so as to ensure that the user's demand for hot water can be satisfied. If the amount of hot water used on the previous day is moderate, the second variation on the basis of the water temperature setting on the previous day can be null. If the amount of hot water used on the previous day is small, it indicates that the user has a small demand for hot water, and hence the second variation on the basis of the water temperature setting on the previous day can be small to make the water temperature setting on the current day lower than the water temperature setting on the previous day, so as to achieve the purpose of energy saving.

According to the invention the water heater has a pressure-bearing water tank, and an upper half portion of the pressure-bearing water tank is provided with a temperature sensor, acquiring the amount of hot water used by the user on the previous day specifically includes: counting the number of times that a temperature value detected by the temperature sensor decreases at a rate greater than or equal to a predetermined rate during a predetermined period of time of the previous day; and determining the amount of hot water used by the user on the previous day according to the number of times, in which the number of times is positively correlated to the amount of hot water used by the user on the previous day.

In this embodiment, as for the pressure-bearing water tank, hot water is generally located in an upper portion of the water tank while cold water is generally located in a lower portion of the water tank, and a water outlet of the water tank is located in the upper portion of the water tank. When the hot water runs out, the temperature value detected by the temperature sensor provided to the upper half portion of the pressure-bearing water tank will plummet. Thus, when the temperature value detected by the temperature sensor decreases at a rate greater than or equal to the predetermined rate, it indicates that the hot water in the water tank has been used up. Further, the amount of hot water used by the user on the previous day can be determined by counting the number of times that the temperature value detected by the temperature sensor decreases at a rate greater than or equal to the predetermined rate during the predetermined period of time of the previous day, in which the predetermined period of time is preferably a time period of peak demand.

According to an embodiment of the present application, calculating the water temperature setting of the water heater on the current day specifically includes: calculating a sum value of the first variation and/or the second variation as well as the water temperature setting of the water heater on the previous day, as the water temperature setting of the water heater on the current day.

According to an embodiment of the present application, the ambient temperature of the current day is the highest ambient temperature of the current day, and the ambient temperature of the previous day is the highest ambient temperature of the previous day; or the ambient temperature of the current day is an average ambient temperature over a preset period of time of the current day, and the ambient temperature of the previous day is an average ambient temperature over the preset period of time of the previous day.

The device for setting the water temperature according to embodiments of a second aspect of the present application includes: an acquiring unit configured to acquire an ambient temperature of a current day and an ambient temperature of a previous day, and/or acquire the amount of hot water used by a user on the previous day; a determining unit configured to determine a first variation in a water temperature setting of the water heater according to a temperature difference value between the ambient temperature of the current day and the ambient temperature of the previous day, and/or determine a second variation in the water temperature setting of the water heater according to the amount of hot water used by the user on the previous day; and a calculating unit configured to calculate the water temperature setting of the water heater on the current day according to the first variation and/or the second variation as well as the water temperature setting of the water heater on the previous day.

With the device for setting the water temperature according to the embodiments of the present application, the first variation in the water temperature setting of the water heater is determined according to the temperature difference value between the ambient temperature of the current day and the ambient temperature of the previous day, and hence the water temperature setting on the current day is calculated based on the water temperature setting on the previous day, such that the water temperature setting of the water heater can be adjusted according to the variation in the ambient temperature, so as to avoid energy waste due to a relatively high water temperature setting even when the ambient temperature rises, and avoid the failure to satisfy the user's water demand due to a relatively low water temperature setting even when the ambient temperature drops.

In addition, the second variation in the water temperature setting of the water heater is determined according to the amount of hot water used by the user on the previous day, and hence the water temperature setting on the current day is calculated based on the water temperature setting on the previous day, such that the water temperature setting of the water heater can be adjusted according to the hot water demand of the user, so as to avoid the energy waste due to a relatively high water temperature setting even when the user's demand for hot water is relatively small, and avoid the failure to satisfy the user's water demand due to a relatively low water temperature setting even when the user's demand for hot water is relatively great.

It can be seen that, the technical solutions of the present application cannot only adjust the water temperature setting of the water heater according to the variation in the ambient temperature, but also adjust the water temperature setting of the water heater according to the user's water demand, and moreover can adjust the water temperature setting of the water heater according to both of the ambient temperature variation and the user's water demand. Thus, the user's water demand can be satisfied at the same time of achieving the purpose of energy saving.

The device for setting the water temperature according to the above embodiments of the present application can further have the following technical features.

According to an embodiment of the present application, the first variation is negatively correlated to the temperature difference value.

In this embodiment, specifically, if the ambient temperature of the current day is higher than the ambient temperature of the previous day (i.e., the temperature difference value is relatively great), the first variation based on the water temperature setting on the previous day may be relatively small, and for example, may be negative, such that the water temperature setting on the current day is lower than the water temperature setting on the previous day. If the ambient temperature of the current day just changes slightly compared to the ambient temperature of the previous day (i.e., the temperature difference value is basically zero), the first variation based on the water temperature setting on the previous day can be null, and for example, may be zero, such that the water temperature setting on the current day is equal to the water temperature setting on the previous day. If the ambient temperature of the current day is lower than the ambient temperature of the previous day (i.e., the temperature difference value is relatively small), the first variation based on the water temperature setting on the previous day may be relatively great, such that the water temperature setting on the current day is higher than the water temperature setting on the previous day.

According to an embodiment of the present application, the determining unit is specifically configured to determine the first variation as M1 when the temperature difference value is smaller than a first set value; determine the first variation as N1 when the temperature difference value is greater than or equal to the first set value and smaller than a second set value; and determine the first variation as P1 when the temperature difference value is greater than or equal to the second set value, in which P1 < N1 < M1.

As a non-limiting embodiment of the present application, if the first set value may be -8°C, and the second set value may be 6°C, M1 may be 1°C, N1 may be 0°C, and P1 may be -1°C. That is, the first variation is negatively correlated to the temperature difference value.

According to an embodiment of the present application, the second variation is positively correlated to the amount of hot water used on the previous day.

In this embodiment, specifically, if the amount of hot water used on the previous day is large, it indicates that the user has a great demand for hot water, and hence the second variation on the basis of the water temperature setting on the previous day can be great to make the water temperature setting on the current day higher than the water temperature setting on the previous day, so as to ensure that the user's demand for hot water can be satisfied. If the amount of hot water used on the previous day is moderate, the second variation on the basis of the water temperature setting on the previous day can be null. If the amount of hot water used on the previous day is small, it indicates that the user has a small demand for hot water, and hence the second variation on the basis of the water temperature setting on the previous day can be small to make the water temperature setting on the current day lower than the water temperature setting on the previous day, so as to achieve the purpose of energy saving.

According to an embodiment of the present application, when the water heater has a pressure-bearing water tank, and an upper half portion of the pressure-bearing water tank is provided with a temperature sensor, the acquiring unit is specifically configured to count the number of times that a temperature value detected by the temperature sensor decreases at a rate greater than or equal to a predetermined rate during a predetermined period of time of the previous day; and determine the amount of hot water used by the user on the previous day according to the number of times, in which the number of times is positively correlated to the amount of hot water used by the user on the previous day.

In this embodiment, as for the pressure-bearing water tank, hot water is generally located in an upper portion of the water tank while cold water is generally located in a lower portion of the water tank, and a water outlet of the water tank is located in the upper portion of the water tank. When the hot water runs out, the temperature value detected by the temperature sensor provided to the upper half portion of the pressure-bearing water tank will plummet. Thus, when the temperature value detected by the temperature sensor decreases at a rate greater than or equal to the predetermined rate, it indicates that the hot water in the water tank has been used up. Further, the amount of hot water used by the user on the previous day can be determined by counting the number of times that the temperature value detected by the temperature sensor decreases at a rate greater than or equal to the predetermined rate during the predetermined period of time of the previous day, in which the predetermined period of time is preferably a time period of peak demand.

According to an embodiment of the present application, the calculating unit is specifically configured to calculate a sum value of the first variation and/or the second variation as well as the water temperature setting of the water heater on the previous day, as the water temperature setting of the water heater on the current day.

According to an embodiment of the present application, the ambient temperature of the current day is the highest ambient temperature of the current day, and the ambient temperature of the previous day is the highest ambient temperature of the previous day; or the ambient temperature of the current day is an average ambient temperature over a preset period of time of the current day, and the ambient temperature of the previous day is an average ambient temperature over the preset period of time of the previous day.

The water heat according to embodiments of a third aspect of the present application includes the device for setting the water temperature according to any one of the above embodiments.

Additional aspects and advantages of embodiments of present disclosure will be given in part in the following descriptions, become apparent in part from the following descriptions, or be learned from the practice of the embodiments of the present application.

## BRIEF DESCRIPTION OF THE DRAWINGS

These and/or other aspects and advantages of embodiments of the present application will become apparent and more readily appreciated from the following descriptions made with reference to the drawings, in which:

Fig. 1 illustrates a flow chart of a method for setting a water temperature for a water heater according to a first embodiment of the present application.

Fig. 2 illustrates a flow chart of a method for setting a water temperature for a water heater according to a second embodiment of the present application.

Fig. 3 illustrates a flow chart of a method for setting a water temperature for a water heater according to a third embodiment of the present application.

Fig. 4 illustrates a schematic block diagram of a device for setting a water temperature for a water heater according to an embodiment of the present application.

Fig. 5 illustrates a schematic block diagram of a water heater according to an embodiment of the present application.

## DETAILED DESCRIPTION

In order to more clearly understand the above objectives, features and advantages of the present application, the present application will be described in further detail with reference to accompanying drawings and specific embodiments. It should be noted that embodiments and features in the embodiments of the present application may be combined with each other without conflict.

In the following description, numerous specific details are set forth in order to provide a thorough understanding of the present application, but the present application may be implemented otherwise than as described herein. Thus, the protection scope of the present application is not limited to the specific embodiments disclosed below.

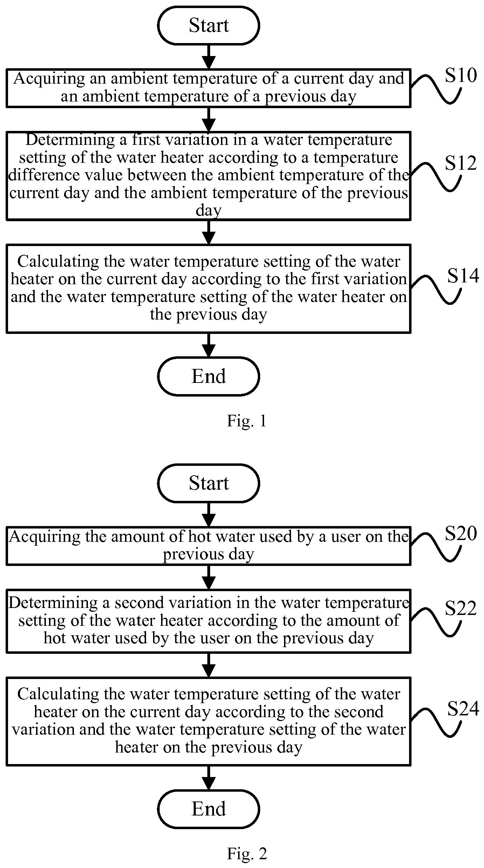

Fig. 1 illustrates a flow chart of a method for setting a water temperature for a water heater according to a first embodiment of the present application.

As illustrated in Fig. 1, the method for setting the water temperature according to the first embodiment of the present application includes: step S10 of acquiring an ambient temperature of a current day and an ambient temperature of a previous day.

In this step, the ambient temperature can be detected by a temperature sensor provided to the water heater. After the temperature sensor detects the ambient temperature, the ambient temperature can be sent to a memory to be stored, and then the ambient temperature of the previous day can be acquired from the memory.

In an embodiment of the present application, the ambient temperature of the current day is the highest ambient temperature of the current day, and the ambient temperature of the previous day is the highest ambient temperature of the previous day.

In another embodiment of the present application, the ambient temperature of the current day is an average ambient temperature over a preset period of time of the current day, and the ambient temperature of the previous day is an average ambient temperature over the preset period of time of the previous day.

In step S12, a first variation in a water temperature setting of the water heater is determined according to a temperature difference value between the ambient temperature of the current day and the ambient temperature of the previous day.

The first variation is negatively correlated to the temperature difference value.

Specifically, if the ambient temperature of the current day is higher than the ambient temperature of the previous day (i.e., the temperature difference value is relatively great), the first variation based on the water temperature setting on the previous day may be relatively small, and for example, may be negative, such that the water temperature setting on the current day is lower than the water temperature setting on the previous day. If the ambient temperature of the current day just changes slightly compared to the ambient temperature of the previous day (i.e., the temperature difference value is basically zero), the first variation based on the water temperature setting on the previous day can be null, and for example, may be zero, such that the water temperature setting on the current day is equal to the water temperature setting on the previous day. If the ambient temperature of the current day is lower than the ambient temperature of the previous day (i.e., the temperature difference value is relatively small), the first variation based on the water temperature setting on the previous day may be relatively great, such that the water temperature setting on the current day is higher than the water temperature setting on the previous day.

In an embodiment of the present application, step S12 specifically includes: determining the first variation as M1 when the temperature difference value is smaller than a first set value; determining the first variation as N1 when the temperature difference value is greater than or equal to the first set value and smaller than a second set value; determining the first variation as P1 when the temperature difference value is greater than or equal to the second set value, in which P1 < N1 < M1.

That is, the value of the first variation can be determined by the following formula:

$$\Delta \text{Tna} = \begin{cases} M1, & T_n < T_{n-1} - A \\ N1, & T_{n-1} - A \leq T_n < T_{n-1} + B \\ P1, & T_n \geq T_{n-1} + B \end{cases}$$

in which $\Delta$Tna represents the first variation, $T_{n-1}$ represents the ambient temperature of the previous day, $T_n$ represents the ambient temperature of the current day, -A represents the first set value, and B represents the second set value; both A and B are positive numbers.

As a non-limiting embodiment of the present application, if the first set value may be -8°C, and the second set value may be 6°C, M1 may be 1°C, N1 may be 0°C, and P1 may be -1°C. If the ambient temperature of the previous day is 30°C, and the ambient temperature of the current day is 20°C, the value of the first variation is 1°C.

In step S14, the water temperature setting of the water heater on the current day is calculated according to the first variation and the water temperature setting of the water heater on the previous day.

In an embodiment of the present application, the step of calculating the water temperature setting of the water heater on the current day specifically includes: calculating a sum value of the first variation and the water temperature setting of the water heater on the previous day, as the water temperature setting of the water heater on the current day.

Specifically, when the water temperature setting on the previous day is 50°C and the first variation is 1°C, the water temperature setting on the current day is 50°C+1°C =51°C.

In the method for setting the water temperature, as illustrated in Fig. 1, the first variation in the water temperature setting of the water heater is determined according to the temperature difference value between the ambient temperature of the current day and the ambient temperature of the previous day, and hence the water temperature setting on the current day is calculated based on the water temperature setting on the previous day, such that the water temperature setting of the water heater can be adjusted according to the variation in the ambient temperature, so as to avoid energy waste due to a relatively high water temperature setting even when the ambient temperature rises, and avoid the failure to satisfy the user's water demand due to a relatively low water temperature setting even when the ambient temperature drops.

Fig. 2 illustrates a flow chart of a method for setting a water temperature for a water heater according to a second embodiment of the present application.

As illustrated in Fig. 2, the method for setting the water temperature according to the second embodiment of the present application includes: step S20 of acquiring the amount of hot water used by the user on the previous day.

In an embodiment of the present application, in a case where the water heater has a pressure-bearing water tank and the temperature sensor is provided to an upper half portion of the pressure-bearing water tank, step S20 specifically includes: counting the number of times that a temperature value detected by the temperature sensor decreases at a rate greater than or equal to a predetermined rate during a predetermined period of time of the previous day; and determining the amount of hot water used by the user on the previous day according to the number of times,

in which the number of times is positively correlated to the amount of hot water used by the user on the previous day.

In this embodiment, as for the pressure-bearing water tank, hot water is generally located in an upper portion of the water tank while cold water is generally located in a lower portion of the water tank, and a water outlet of the water tank is located in the upper portion of the water tank. When the hot water runs out, the temperature value detected by the temperature sensor provided to the upper half portion of the pressure-bearing water tank will plummet. Thus, when the temperature value detected by the temperature sensor decreases at a rate greater than or equal to the predetermined rate, it indicates that the hot water in the water tank has been used up. Further, the amount of hot water used by the user on the previous day can be determined by counting the number of times that the temperature value detected by the temperature sensor decreases at a rate greater than or equal to the predetermined rate during the predetermined period of time of the previous day, in which the predetermined period of time is preferably a time period of peak demand.

In other embodiments of the present application, the amount of hot water used by the user can be measured by devices such as a water flow meter.

In step S22, a second variation in a water temperature setting of the water heater can be determined according to the amount of hot water used by the user on the previous day.

The second variation is positively correlated to the amount of hot water used on the previous day.

Specifically, if the amount of hot water used on the previous day is large, it indicates that the user has a great demand for hot water, and hence the second variation on the basis of the water temperature setting on the previous day can be great to make the water temperature setting on the current day higher than the water temperature setting on the previous day, so as to ensure that the user's demand for hot water can be satisfied. If the amount of hot water used on the previous day is moderate, the second variation on the basis of the water temperature setting on the previous day can be null. If the amount of hot water used on the previous day is small, it indicates that the user has a small demand for hot water, and hence the second variation on the basis of the water temperature setting on the previous day can be small to make the water temperature setting on the current day lower than the water temperature setting on the previous day, so as to achieve a purpose of energy saving.

In an embodiment of the present application, the value of the second variation can be determined by the following formula:

$$\Delta \text{Tnb} = \begin{cases} M2, & N = 0 \\ N2, & N = 1 \\ P2, & N = 2 \\ & \dots \end{cases}$$

in which $\Delta$Tnb represents the second variation, $N$ represents the number of times that the temperature value detected by the temperature sensor decreases at a rate greater than or equal to the predetermined rate during the predetermined period of time of the previous day, and $M2$, $N2$, $P2$ are set values.

As a non-limiting embodiment of the present application, $M2$ may be -1°C, $N2$ may be 0°C, and $P2$ may be 1°C. If the number of times counted is 2, the value of the second variation is 1°C.

In step S24, the water temperature setting of the water heater on the current day is calculated according to the second variation and the water temperature setting of the water heater on the previous day.

In an embodiment of the present application, the step of calculating the water temperature setting of the water heater on the current day specifically includes: calculating a sum value of the second variation and the water temperature setting of the water heater on the previous day, as the water temperature setting of the water heater on the current day.

Specifically, when the water temperature setting on the previous day is 50°C and the second variation is 1°C, the water temperature setting on the current day is 50°C+1°C =51°C.

In the method for setting the water temperature, as illustrated in Fig. 2, the second variation in the water temperature setting of the water heater is determined according to the amount of hot water used by the user on the previous day, and hence the water temperature setting on the current day is calculated based on the water temperature setting on the previous day, such that the water temperature setting of the water heater can be adjusted according to the user's demand for hot water, so as to avoid the energy waste due to a relatively high water temperature setting even when the hot water demand of the user is relatively small, and avoid the failure to satisfy the user's water demand due to a relatively low water temperature setting even when the hot water demand of the user is relatively great.

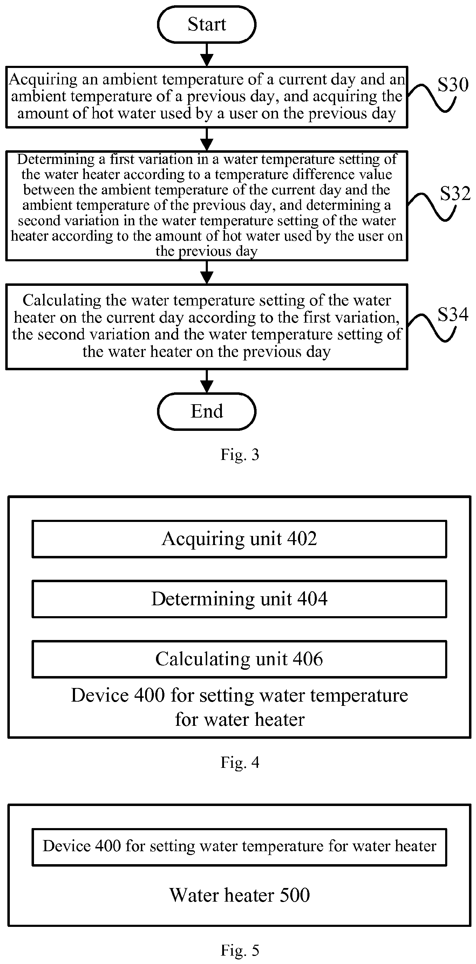

Fig. 3 illustrates a flow chart of a method for setting a water temperature for a water heater according to a third embodiment of the present application.

As illustrated in Fig. 3, the method for setting the water temperature according to the third embodiment of the present application includes: step S30 of acquiring an ambient temperature of a current day and an ambient temperature of a previous day, and acquiring the amount of hot water used by the user on the previous day.

In this step, the ambient temperature can be detected by a temperature sensor provided to the water heater.

After the temperature sensor detects the ambient temperature, the ambient temperature can be sent to a memory to be stored, and then the ambient temperature of the previous day can be acquired from the memory.

In an embodiment of the present application, the ambient temperature of the current day is the highest ambient temperature of the current day, and the ambient temperature of the previous day is the highest ambient temperature of the previous day.

In another embodiment of the present application, the ambient temperature of the current day is an average ambient temperature over a preset period of time of the current day, and the ambient temperature of the previous day is an average ambient temperature over the preset period of time of the previous day.

In an embodiment of the present application, in a case where the water heater has a pressure-bearing water tank and the temperature sensor is provided to an upper half portion of the pressure-bearing water tank, acquiring the amount of hot water used by the user on the previous day in step S30 specifically includes: counting the number of times that a temperature value detected by the temperature sensor decreases at a rate greater than or equal to a predetermined rate during a predetermined period of time of the previous day; and determining the amount of hot water used by the user on the previous day according to the number of times, in which the number of times is positively correlated to the amount of hot water used by the user on the previous day.

In this embodiment, as for the pressure-bearing water tank, hot water is generally located in an upper portion of the water tank while cold water is generally located in a lower portion of the water tank, and a water outlet of the water tank is located in the upper portion of the water tank. When the hot water runs out, the temperature value detected by the temperature sensor provided to the upper half portion of the pressure-bearing water tank will plummet. Thus, when the temperature value detected by the temperature sensor decreases at a rate greater than or equal to the predetermined rate, it indicates that the hot water in the water tank has been used up. Further, the amount of hot water used by the user on the previous day can be determined by counting the number of times that the temperature value detected by the temperature sensor decreases at a rate greater than or equal to the predetermined rate during the predetermined period of time of the previous day, in which the predetermined period of time is preferably a time period of peak demand.

In other embodiments of the present application, the amount of hot water used by the user can be measured by devices such as a water flow meter.

In step S32, a first variation in a water temperature setting of the water heater is determined according to a temperature difference value between the ambient temperature of the current day and the ambient temperature of the previous day, and a second variation in the water temperature setting of the water heater can be determined according to the amount of hot water used by the user on the previous day.

The first variation is negatively correlated to the temperature difference value.

Specifically, if the ambient temperature of the current day is higher than the ambient temperature of the previous day (i.e., the temperature difference value is relatively great), the first variation based on the water temperature setting on the previous day may be relatively small, and for example, may be negative, such that the water temperature setting on the current day is lower than the water temperature setting on the previous day. If the ambient temperature of the current day just changes slightly compared to the ambient temperature of the previous day (i.e., the temperature difference value is basically zero), the first variation based on the water temperature setting on the previous day can be null, and for example, may be zero, such that the water temperature setting on the current day is equal to the water temperature setting on the previous day. If the ambient temperature of the current day is lower than the ambient temperature of the previous day (i.e., the temperature difference value is relatively small), the first variation based on the water temperature setting on the previous day may be relatively great, such that the water temperature setting on the current day is higher than the water temperature setting on the previous day.

In an embodiment of the present application, determining a first variation in a water temperature setting of the water heater according to a temperature difference value between the ambient temperature of the current day and the ambient temperature of the previous day in step S32 specifically includes: determining the first variation as M1 when the temperature difference value is smaller than a first set value; determining the first variation as N1 when the temperature difference value is greater than or equal to the first set value and smaller than a second set value; determining the first variation as P1 when the temperature difference value is greater than or equal to the second set value, in which P1 < N1 < M1.

That is, the value of the first variation can be determined by the following formula:

$$\Delta \text{Tna} = \begin{cases} M1, & T_n < T_{n-1} - A \\ N1, & T_{n-1} - A \le T_n < T_{n-1} + B \\ P1, & T_n \ge T_{n-1} + B \end{cases}$$

in which $\Delta$Tna represents the first variation, $T_{n-1}$ represents the ambient temperature of the previous day, $T_n$ represents

the ambient temperature of the current day, -A represents the first set value, and B represents the second set value; both A and B are positive numbers.

As a non-limiting embodiment of the present application, if the first set value may be -8°C, and the second set value may be 6°C, M1 may be 1°C, N1 may be 0°C, and P1 may be -1°C. If the ambient temperature of the previous day is 30°C, and the ambient temperature of the current day is 20°C, the value of the first variation is 1°C.

In addition, the second variation is positively correlated to the amount of hot water used on the previous day.

Specifically, if the amount of hot water used on the previous day is large, it indicates that the user has a great demand for hot water, and hence the second variation on the basis of the water temperature setting on the previous day can be great to make the water temperature setting on the current day higher than the water temperature setting on the previous day, so as to ensure that the user's demand for hot water can be satisfied. If the amount of hot water used on the previous day is moderate, the second variation on the basis of the water temperature setting on the previous day can be null. If the amount of hot water used on the previous day is small, it indicates that the user has a small demand for hot water, and hence the second variation on the basis of the water temperature setting on the previous day can be small to make the water temperature setting on the current day lower than the water temperature setting on the previous day, so as to achieve the purpose of energy saving.

In an embodiment of the present application, the value of the second variation can be determined by the following formula:

$$\Delta \text{Tnb} = \begin{cases} M2, & N = 0 \\ N2, & N = 1 \\ P2, & N = 2 \\ & \dots \end{cases}$$

in which $\Delta$Tnb represents the second variation, $N$ represents the number of times that the temperature value detected by the temperature sensor decreases at a rate greater than or equal to the predetermined rate during the predetermined period of time of the previous day, and $M2$, $N2$, $P2$ are set values.

As a non-limiting embodiment of the present application, $M2$ may be -1°C, $N2$ may be 0°C, and $P2$ may be 1°C. If the number of times counted is 2, the value of the second variation is 1°C.

In step S34, the water temperature setting of the water heater on the current day is calculated according to the first variation, the second variation, and the water temperature setting of the water heater on the previous day.

In an embodiment of the present application, step S34 specifically includes: calculating a sum value of the first variation, the second variation, and the water temperature setting of the water heater on the previous day, as the water temperature setting of the water heater on the current day.

Specifically, when the water temperature setting on the previous day is 50°C, the first variation is 1°C, and the second variation is 1°C, the water temperature setting on the current day is 50°C+1°C +1°C =52°C.

In the method for setting the water temperature, as illustrated in Fig. 3, the water temperature setting of the water heater can be adjusted according to the variation in the ambient temperature and the water demand of the user, which not only satisfies the user's water demand, but also achieves the purpose of energy saving.

Fig. 4 illustrates a schematic block diagram of a device for setting a water temperature for a water heater according to an embodiment of the present application.

As illustrated in Fig. 4, a device 400 for setting a water temperature for a water heater according to the embodiment of the present application includes an acquiring unit 402, a determining unit 404, and a calculating unit 406.

The acquiring unit 402 is configured to acquire an ambient temperature of a current day and an ambient temperature of a previous day, and/or acquire the amount of hot water used by the user on the previous day. The determining unit 404 is configured to determine a first variation in a water temperature setting of the water heater according to a temperature difference value between the ambient temperature of the current day and the ambient temperature of the previous day, and/or determine a second variation in the water temperature setting of the water heater according to the amount of hot water used by the user on the previous day. The calculating unit 406 is configured to calculate the water temperature setting of the water heater on the current day according to the first variation and/or the second variation as well as the water temperature setting of the water heater on the previous day.

The first variation in the water temperature setting of the water heater is determined according to the temperature difference value between the ambient temperature of the current day and the ambient temperature of the previous day, and hence the water temperature setting on the current day is calculated based on the water temperature setting on the previous day, such that the water temperature setting of the water heater can be adjusted according to the variation in the ambient temperature, so as to avoid energy waste due to a relatively high water temperature setting even when the ambient temperature rises, and avoid the failure to satisfy the user's water demand due to a relatively low water temperature setting even when the ambient temperature drops.

The second variation in the water temperature setting of the water heater is determined according to the amount of hot water used by the user on the previous day, and hence the water temperature setting on the current day is calculated based on the water temperature setting on the previous day, such that the water temperature setting of the water heater can be adjusted according to the hot water demand of the user, so as to avoid the energy waste due to a relatively high water temperature setting even when the user's demand for hot water is relatively small, and avoid the failure to satisfy the user's water demand due to a relatively low water temperature setting even when the user's demand for hot water is relatively great.

Therefore, the technical solutions of the present application cannot only adjust the water temperature setting of the water heater according to the variation in the ambient temperature, but also adjust the water temperature setting of the water heater according to the user's water demand, and moreover can adjust the water temperature setting of the water heater according to both of the ambient temperature variation and the user's water demand. Thus, the user's water demand can be satisfied at the same time of achieving the purpose of energy saving.

The device 400 according to the above embodiment of the present application can further have the following technical features.

According to an embodiment of the present application, the first variation is negatively correlated to the temperature difference value.

In this embodiment, specifically, if the ambient temperature of the current day is higher than the ambient temperature of the previous day (i.e., the temperature difference value is relatively great), the first variation based on the water temperature setting on the previous day may be relatively small, and for example, may be negative, such that the water temperature setting on the current day is lower than the water temperature setting on the previous day. If the ambient temperature of the current day just changes slightly compared to the ambient temperature of the previous day (i.e., the temperature difference value is basically zero), the first variation based on the water temperature setting on the previous day can be null, and for example, may be zero, such that the water temperature setting on the current day is equal to the water temperature setting on the previous day. If the ambient temperature of the current day is lower than the ambient temperature of the previous day (i.e., the temperature difference value is relatively small), the first variation based on the water temperature setting on the previous day may be relatively great, such that the water temperature setting on the current day is higher than the water temperature setting on the previous day.

According to an embodiment of the present application, the determining unit 404 is specifically configured to determine the first variation as M1 when the temperature difference value is smaller than a first set value; determine the first variation as N1 when the temperature difference value is greater than or equal to the first set value and smaller than a second set value; and determine the first variation as P1 when the temperature difference value is greater than or equal to the second set value, in which P1 < N1 < M1.

As a non-limiting embodiment of the present application, if the first set value may be -8°C, and the second set value may be 6°C, M1 may be 1°C, N1 may be 0°C, and P1 may be -1°C. That is, the first variation is negatively correlated to the temperature difference value.

According to an embodiment of the present application, the second variation is positively correlated to the amount of hot water used on the previous day.

In this embodiment, specifically, if the amount of hot water used on the previous day is large, it indicates that the user has a great demand for hot water, and hence the second variation on the basis of the water temperature setting on the previous day can be great to make the water temperature setting on the current day higher than the water temperature setting on the previous day, so as to ensure that the user's demand for hot water can be satisfied. If the amount of hot water used on the previous day is moderate, the second variation on the basis of the water temperature setting on the previous day can be null. If the amount of hot water used on the previous day is small, it indicates that the user has a small demand for hot water, and hence the second variation on the basis of the water temperature setting on the previous day can be small to make the water temperature setting on the current day lower than the water temperature setting on the previous day, so as to achieve the purpose of energy saving.

According to an embodiment of the present application, in a case where the water heater has a pressure-bearing water tank and the temperature sensor is provided to an upper half portion of the pressure-bearing water tank, the acquiring unit 402 is specifically configured to count the number of times that a temperature value detected by the temperature sensor decreases at a rate greater than or equal to a predetermined rate during a predetermined period of time of the previous day; and determine the amount of hot water used by the user on the previous day according to the number of times, in which the number of times is positively correlated to the amount of hot water used by the user on the previous day.

In this embodiment, as for the pressure-bearing water tank, hot water is generally located in an upper portion of the water tank while cold water is generally located in a lower portion of the water tank, and a water outlet of the water tank is located in the upper portion of the water tank. When the hot water runs out, the temperature value detected by the temperature sensor provided to the upper half portion of the pressure-bearing water tank will plummet. Thus, when the temperature value detected by the temperature sensor decreases at a rate greater than or equal to the predetermined rate, it indicates that the hot water in the water tank has been used up. Further, the amount of hot water used by the user on the previous day can be determined by counting the number of times that the temperature value detected by the temperature sensor decreases at a rate greater than or equal to the predetermined rate during the predetermined period of time of the previous day, in which the predetermined period of time is preferably a time period of peak demand.

According to an embodiment of the present application, the calculating unit 406 is specifically configured to calculate a sum value of the first variation and/or the second variation as well as the water temperature setting of the water heater on the previous day, as the water temperature setting of the water heater on the current day.

According to an embodiment of the present application, the ambient temperature of the current day is the highest ambient temperature of the current day, and the ambient temperature of the previous day is the highest ambient temperature of the previous day; or the ambient temperature of the current day is an average ambient temperature over a preset period of time of the current day, and the ambient temperature of the previous day is an average ambient temperature over the preset period of time of the previous day.

The device 400 illustrated in Fig. 4 can be applied to water heaters. Specifically, as illustrated in Fig. 5, a water heater 500 according to an embodiment of the present application includes the device 400 as shown in Fig. 4. The water heater can be a heat-pump water heater.

After the water temperature setting of the water heater on the current day is determined, the water heater starts to work on the basis of the water temperature setting, i.e., heating the water in the water tank up to the water temperature setting.

The technical solutions of the present application have been explained in detail with reference to the drawings. The present application proposes a novel water temperature setting method for a water heater, whereby the water temperature setting of the water heater can be adjusted according to the variation in the ambient temperature, or according to the user's water demand, or according to both of the ambient temperature variation and the user's water demand. Thus, the user's water demand can be satisfied at the same time of achieving the purpose of energy saving.

The above description only involves preferred embodiments of the present application, and is not intended to limit the present application. It would be appreciated by those skilled in the art that various modifications and changes can be made to the present application, and any modifications, equivalent substitutions, improvements or the like made within the principle of the present application are intended to be included in the scope of the present application.

## Claims

1. A method for setting a water temperature for a water heater, comprising:

    acquiring (S10, S30) an ambient temperature of a current day and an ambient temperature of a previous day, and acquiring (S20, S30) the amount of hot water used by a user on the previous day;
    determining (S12) a first variation in a water temperature setting of the water heater according to a temperature difference value between the ambient temperature of the current day and the ambient temperature of the previous day, and determining (S22) a second variation in the water temperature setting of the water heater according to the amount of hot water used by the user on the previous day; and
    calculating (S14, S24) the water temperature setting of the water heater on the current day according to the first variation and the second variation as well as the water temperature setting of the water heater on the previous day,
    wherein when the water heater has a pressure-bearing water tank, and an upper half portion of the pressure-bearing water tank is provided with a temperature sensor, acquiring the amount of hot water used by the user on the previous day specifically comprises:

    counting the number of times that a temperature value detected by the temperature sensor decreases at a rate greater than or equal to a predetermined rate during a predetermined period of time of the previous day; and
    determining the amount of hot water used by the user on the previous day according to the number of times, in which the number of times is positively correlated to the amount of hot water used by the user on the previous day.

2. The method according to claim 1, wherein the first variation is negatively correlated to the temperature difference value.

3. The method according to claim 2, wherein determining a first variation in a water temperature setting of the water heater according to a temperature difference value between the ambient temperature of the current day and the ambient temperature of the previous day, specifically comprises:

> determining the first variation as M1 when the temperature difference value is smaller than a first set value;
> determining the first variation as N1 when the temperature difference value is greater than or equal to the first set value and smaller than a second set value; and
> determining the first variation as P1 when the temperature difference value is greater than or equal to the second set value,
> in which P1 < N1 < M1.

4. The method according to claim 1, wherein the second variation is positively correlated to the amount of hot water used on the previous day.

5. The method according to any one of claims 1 to 4, wherein calculating the water temperature setting of the water heater on the current day specifically comprises:
calculating a sum value of the first variation and/or the second variation as well as the water temperature setting of the water heater on the previous day, as the water temperature setting of the water heater on the current day.

6. The method according to any one of claims 1 to 5, wherein the ambient temperature of the current day is the highest ambient temperature of the current day, and the ambient temperature of the previous day is the highest ambient temperature of the previous day.

7. The method according to any one of claims 1 to 5, wherein the ambient temperature of the current day is an average ambient temperature over a preset period of time of the current day, and the ambient temperature of the previous day is an average ambient temperature over the preset period of time of the previous day.

8. A device (400) for setting a water temperature for a water heater, wherein the water heater has a pressure-bearing water tank and an upper half portion of the pressure-bearing water tank is provided with a temperature sensor, the device comprising:

> an acquiring unit (402) configured to acquire an ambient temperature of a current day and an ambient temperature of a previous day, and acquire the amount of hot water used by a user on the previous day, wherein the acquiring unit is configured to acquire the amount of hot water used by the user on the previous day by:
>
> > counting the number of times that a temperature value detected by the temperature sensor decreases at a rate greater than or equal to a predetermined rate during a predetermined period of time of the previous day; and
> > determining the amount of hot water used by the user on the previous day according to the number of times, in which the number of times is positively correlated to the amount of hot water used by the user on the previous day;
>
> a determining unit (404) configured to determine a first variation in a water temperature setting of the water heater according to a temperature difference value between the ambient temperature of the current day and the ambient temperature of the previous day, and determine a second variation in the water temperature setting of the water heater according to the amount of hot water used by the user on the previous day; and
> a calculating unit (402) configured to calculate the water temperature setting of the water heater on the current day according to the first variation and the second variation as well as the water temperature setting of the water heater on the previous day.

9. The device according to claim 8, wherein the first variation is negatively correlated to the temperature difference value.

10. The device according to claim 9, wherein the determining unit is specifically configured to determine the first variation as M1 when the temperature difference value is smaller than a first set value;
determine the first variation as N1 when the temperature difference value is greater than or equal to the first set value and smaller than a second set value; and
determine the first variation as P1 when the temperature difference value is greater than or equal to the second set value,
in which P1 < N1 < M1.

**11.** The device according to claim 8, wherein the second variation is positively correlated to the amount of hot water used on the previous day.

**12.** The device according to claim 8, wherein when the water heater has a pressure-bearing water tank, and an upper half portion of the pressure-bearing water tank is provided with a temperature sensor, the acquiring unit is specifically configured to count the number of times that a temperature value detected by the temperature sensor decreases at a rate greater than or equal to a predetermined rate during a predetermined period of time of the previous day; and determine the amount of hot water used by the user on the previous day according to the number of times, in which the number of times is positively correlated to the amount of hot water used by the user on the previous day.

**13.** The device according to any one of claims 8 to 12, wherein the calculating unit is specifically configured to calculate a sum value of the first variation and/or the second variation as well as the water temperature setting of the water heater on the previous day, as the water temperature setting of the water heater on the current day.

**14.** The device according to any one of claims 8 to 13, wherein the ambient temperature of the current day is the highest ambient temperature of the current day, and the ambient temperature of the previous day is the highest ambient temperature of the previous day; or
the ambient temperature of the current day is an average ambient temperature over a preset period of time of the current day, and the ambient temperature of the previous day is an average ambient temperature over the preset period of time of the previous day.

**15.** A water heater (500), comprising a device (400) for setting a water temperature for a water heater according to any one of claims 8 to 14.

**Patentansprüche**

**1.** Verfahren zum Einstellen einer Wassertemperatur für einen Warmwasserbereiter, das Folgendes umfasst:

Erfassen (S10, S30) einer Umgebungstemperatur eines aktuellen Tags und einer Umgebungstemperatur eines vorherigen Tags und Erfassen (S20, S30) der von einem Benutzer an dem vorherigen Tag verbrauchten Menge an Warmwasser;
Bestimmen (S12) einer ersten Änderung einer Wassertemperatureinstellung des Warmwasserbereiters gemäß einem Temperaturdifferenzwert zwischen der Umgebungstemperatur des aktuellen Tags und der Umgebungstemperatur des vorherigen Tags und Bestimmen (S22) einer zweiten Änderung der Wassertemperatureinstellung des Warmwasserbereiters gemäß der von dem Benutzer an dem vorherigen Tag verbrauchten Menge an Warmwasser; und
Berechnen (S14, S24) der Wassertemperatureinstellung des Warmwasserbereiters an dem aktuellen Tag gemäß der ersten Änderung und der zweiten Änderung sowie der Wassertemperatureinstellung des Warmwasserbereiters an dem vorherigen Tag,
wobei, wenn der Warmwasserbereiter einen drucktragenden Wasserspeicher aufweist und ein oberer halber Abschnitt des drucktragenden Wasserspeichers mit einem Temperatursensor versehen ist, das Erfassen der von dem Benutzer an dem vorherigen Tag verbrauchten Menge an Warmwasser speziell Folgendes umfasst:

Zählen der Anzahl Male, die ein von dem Temperatursensor gemessener Temperaturwert während eines vorgegebenen Zeitraums des vorherigen Tags mit einer Geschwindigkeit abnimmt, die größer als oder gleich einer vorgegebenen Geschwindigkeit ist; und
Bestimmen der von dem Benutzer an dem vorherigen Tag verbrauchten Menge an Warmwasser gemäß der Anzahl Male,
wobei die Anzahl Male mit der von dem Benutzer an dem vorherigen Tag verbrauchten Menge an Warmwasser positiv korreliert.

**2.** Verfahren nach Anspruch 1, wobei die erste Änderung mit dem Temperaturdifferenzwert negativ korreliert.

**3.** Verfahren nach Anspruch 2, wobei das Bestimmen einer ersten Änderung einer Wassertemperatureinstellung des Warmwasserbereiters gemäß einem Temperaturdifferenzwert zwischen der Umgebungstemperatur des aktuellen Tags und der Umgebungstemperatur des vorherigen Tags speziell Folgendes umfasst:

Bestimmen der ersten Änderung als M1, wenn der Temperaturdifferenzwert kleiner als ein erster Einstellwert ist;
Bestimmen der ersten Änderung als N1, wenn der Temperaturdifferenzwert größer als oder gleich dem ersten Einstellwert und kleiner als ein zweiter Einstellwert ist; und
Bestimmen der ersten Änderung als P1, wenn der Temperaturdifferenzwert größer als oder gleich dem zweiten Einstellwert ist,
wobei P1 < N1 < M1.

4. Verfahren nach Anspruch 1, wobei die zweite Änderung mit der an dem vorherigen Tag verbrauchten Menge an Warmwasser positiv korreliert.

5. Verfahren nach einem der Ansprüche 1 bis 4, wobei das Berechnen der Wassertemperatureinstellung des Warmwasserbereiters an dem aktuellen Tag speziell Folgendes umfasst:
Berechnen eines Summenwerts der ersten Änderung und/oder der zweiten Änderung sowie der Wassertemperatureinstellung des Warmwasserbereiters an dem vorherigen Tag als die Wassertemperatureinstellung des Warmwasserbereiters an dem aktuellen Tag.

6. Verfahren nach einem der Ansprüche 1 bis 5, wobei die Umgebungstemperatur des aktuellen Tags die höchste Umgebungstemperatur des aktuellen Tags ist und die Umgebungstemperatur des vorherigen Tags die höchste Umgebungstemperatur des vorherigen Tags ist.

7. Verfahren nach einem der Ansprüche 1 bis 5, wobei die Umgebungstemperatur des aktuellen Tags eine durchschnittliche Umgebungstemperatur in einem voreingestellten Zeitraum des aktuellen Tags ist und die Umgebungstemperatur des vorherigen Tags eine durchschnittliche Umgebungstemperatur in dem voreingestellten Zeitraum des vorherigen Tags ist.

8. Vorrichtung (400) zum Einstellen einer Wassertemperatur für einen Warmwasserbereiter, wobei der Warmwasserbereiters einen drucktragenden Wasserspeicher aufweist und ein oberer halber Abschnitt des drucktragenden Wasserspeichers mit einem Temperatursensor versehen ist, wobei die Vorrichtung Folgendes umfasst:

eine Erfassungseinheit (402), die dazu konfiguriert ist, eine Umgebungstemperatur eines aktuellen Tags und eine Umgebungstemperatur eines vorherigen Tags zu erfassen und die von einem Benutzer an dem vorherigen Tag verbrauchte Menge an Warmwasser zu erfassen, wobei die Erfassungseinheit dazu konfiguriert ist, die von dem Benutzer an dem vorherigen Tag verbrauchte Menge an Warmwasser durch Folgendes zu erfassen:

Zählen der Anzahl Male, die ein von dem Temperatursensor gemessener Temperaturwert während eines vorgegebenen Zeitraums des vorherigen Tags mit einer Geschwindigkeit abnimmt, die größer als oder gleich einer vorgegebenen Geschwindigkeit ist; und
Bestimmen der von dem Benutzer an dem vorherigen Tag verbrauchten Menge an Warmwasser gemäß der Anzahl Male, wobei die Anzahl Male mit der von dem Benutzer an dem vorherigen Tag verbrauchten Menge an Warmwasser positiv korreliert;

eine Bestimmungseinheit (404), die dazu konfiguriert ist, eine erste Änderung einer Wassertemperatureinstellung des Warmwasserbereiters gemäß einem Temperaturdifferenzwert zwischen der Umgebungstemperatur des aktuellen Tags und
der Umgebungstemperatur des vorherigen Tags zu bestimmen, und eine zweite Änderung der Wassertemperatureinstellung des Warmwasserbereiters gemäß der von dem Benutzer an dem vorherigen Tag verbrauchten Menge an Warmwasser zu bestimmen; und
eine Berechnungseinheit (402), die dazu konfiguriert ist, die
Wassertemperatureinstellung des Warmwasserbereiters an dem aktuellen Tag gemäß der ersten Änderung und der zweiten Änderung sowie der
Wassertemperatureinstellung des Warmwasserbereiters an dem vorherigen Tag zu berechnen.

9. Vorrichtung nach Anspruch 8, wobei die erste Änderung mit dem Temperaturdifferenzwert negativ korreliert.

10. Vorrichtung nach Anspruch 9, wobei die Bestimmungseinheit speziell dazu konfiguriert ist, die erste Änderung als M1 zu bestimmen, wenn der Temperaturdifferenzwert kleiner als ein erster Einstellwert ist;
die erste Änderung als N1 zu bestimmen, wenn der Temperaturdifferenzwert größer als oder gleich dem ersten Einstellwert und kleiner als ein zweiter Einstellwert ist; und

die erste Änderung als P1 zu bestimmen, wenn der Temperaturdifferenzwert größer als oder gleich dem zweiten Einstellwert ist,
wobei P1 < N1 < M1.

11. Vorrichtung nach Anspruch 8, wobei die zweite Änderung mit der an dem vorherigen Tag verbrauchten Menge an Warmwasser positiv korreliert.

12. Vorrichtung nach Anspruch 8, wobei, wenn der Warmwasserbereiter einen drucktragenden Wasserspeicher aufweist und ein oberer halber Abschnitt des drucktragenden Wasserspeichers mit einem Temperatursensor versehen ist, die Erfassungseinheit speziell dazu konfiguriert ist, die Anzahl Male zu zählen, die ein von dem Temperatursensor gemessener Temperaturwert während eines vorgegebenen Zeitraums des vorherigen Tags mit einer Geschwindigkeit abnimmt, die größer als oder gleich einer vorgegebenen Geschwindigkeit ist; und
die von dem Benutzer an dem vorherigen Tag verbrauchte Menge an Warmwasser gemäß der Anzahl Male zu bestimmen, wobei die Anzahl Male mit der von dem Benutzer an dem vorherigen Tag verbrauchten Menge an Warmwasser positiv korreliert.

13. Vorrichtung nach einem der Ansprüche 8 bis 12, wobei die Berechnungseinheit speziell dazu konfiguriert ist, einen Summenwert der ersten Änderung und/oder der zweiten Änderung sowie der Wassertemperatureinstellung des Warmwasserbereiters an dem vorherigen Tag als die Wassertemperatureinstellung des Warmwasserbereiters an dem aktuellen Tag zu berechnen.

14. Vorrichtung nach einem der Ansprüche 8 bis 13, wobei die Umgebungstemperatur des aktuellen Tags die höchste Umgebungstemperatur des aktuellen Tags ist und die Umgebungstemperatur des vorherigen Tags die höchste Umgebungstemperatur des vorherigen Tags ist; oder
die Umgebungstemperatur des aktuellen Tags eine durchschnittliche Umgebungstemperatur in einem voreingestellten Zeitraum des aktuellen Tags ist und die Umgebungstemperatur des vorherigen Tags eine durchschnittliche Umgebungstemperatur in dem voreingestellten Zeitraum des vorherigen Tags ist.

15. Warmwasserbereiter (500), umfassend eine Vorrichtung (400) zum Einstellen einer Wassertemperatur für einen Warmwasserbereiter nach einem der Ansprüche 8 bis 14.

**Revendications**

1. Procédé pour le réglage d'une température d'eau pour un chauffe-eau, comprenant :

l'acquisition (S10, S30) d'une température ambiante d'une journée en cours et d'une température ambiante d'une journée précédente, et l'acquisition (S20, S30) de la quantité d'eau chaude utilisée par un utilisateur la journée précédente ;
la détermination (S12) d'une première variation d'un réglage de température d'eau du chauffe-eau en fonction d'une valeur de différence de température entre la température ambiante de la journée en cours et la température ambiante de la journée précédente, et la détermination (S22) d'une deuxième variation du réglage de température d'eau du chauffe-eau en fonction de la quantité d'eau chaude utilisée par l'utilisateur la journée précédente ; et
le calcul (S14, S24) du réglage de température d'eau du chauffe-eau pour la journée en cours en fonction de la première variation et de la deuxième variation ainsi que du réglage de température d'eau du chauffe-eau pour la journée précédente,
où, lorsque le chauffe-eau comporte un réservoir d'eau supportant la pression, et qu'une moitié supérieure du réservoir d'eau supportant la pression est munie d'un capteur de température, l'acquisition de la quantité d'eau chaude utilisée par l'utilisateur la journée précédente comprend spécifiquement :

le comptage du nombre de fois qu'une valeur de température détectée par le capteur de température diminue à une vitesse supérieure ou égale à une vitesse prédéterminée pendant une période de temps prédéterminée de la journée précédente ; et
la détermination de la quantité d'eau chaude utilisée par l'utilisateur la journée précédente en fonction du nombre de fois,
dans lequel le nombre de fois est corrélé positivement à la quantité d'eau chaude utilisée par l'utilisateur la journée précédente.

**2.** Procédé selon la revendication 1, où la première variation est corrélée négativement à la valeur de différence de température.

**3.** Procédé selon la revendication 2, où la détermination d'une première variation d'un réglage de température d'eau du chauffe-eau en fonction d'une valeur de différence de température entre la température ambiante de la journée en cours et la température ambiante de la journée précédente, comprend spécifiquement :

la détermination de la première variation comme M1 lorsque la valeur de différence de température est inférieure à une première valeur de consigne ;
la détermination de la première variation comme N1 lorsque la valeur de différence de température est supérieure ou égale à la première valeur de consigne et inférieure à une deuxième valeur de consigne ; et
la détermination de la première variation comme P1 lorsque la valeur de différence de température est supérieure ou égale à la deuxième valeur de consigne,
dans lequel $P1 < N1 < M1$.

**4.** Procédé selon la revendication 1, où la deuxième variation est corrélée positivement à la quantité d'eau chaude utilisée la journée précédente.

**5.** Procédé selon l'une quelconque des revendications 1 à 4, où le calcul du réglage de température d'eau du chauffe-eau pour la journée en cours comprend spécifiquement :
le calcul d'une valeur totale de la première variation et/ou de la deuxième variation ainsi que du réglage de température d'eau du chauffe-eau la journée précédente, comme le réglage de température d'eau du chauffe-eau pour la journée en cours.

**6.** Procédé selon l'une quelconque des revendications 1 à 5, où la température ambiante de la journée en cours est la température ambiante la plus élevée de la journée en cours, et la température ambiante de la journée précédente est la température ambiante la plus élevée de la journée précédente.

**7.** Procédé selon l'une quelconque des revendications 1 à 5, où la température ambiante de la journée en cours est une température ambiante moyenne sur une période de temps prédéfinie de la journée en cours, et la température ambiante de la journée précédente est une température ambiante moyenne sur la période de temps prédéfinie de la journée précédente.

**8.** Dispositif (400) pour le réglage d'une température d'eau pour un chauffe-eau, où le chauffe-eau comporte un réservoir d'eau supportant la pression et une moitié supérieure du réservoir d'eau supportant la pression est munie d'un capteur de température, le dispositif comprenant :

une unité d'acquisition (402) configurée pour acquérir une température ambiante d'une journée en cours et une température ambiante d'une journée précédente, et acquérir la quantité d'eau chaude utilisée par un utilisateur la journée précédente, où l'unité d'acquisition est configurée pour acquérir la quantité d'eau chaude utilisé par l'utilisateur la journée précédente par :

le comptage du nombre de fois qu'une valeur de température détectée par le capteur de température diminue à une vitesse supérieure ou égale à une vitesse prédéterminée pendant une période de temps prédéterminée de la journée précédente ; et
la détermination de la quantité d'eau chaude utilisée par l'utilisateur la journée précédente en fonction du nombre de fois, dans lequel le nombre de fois est corrélé positivement à la quantité d'eau chaude utilisée par l'utilisateur la journée précédente ;

une unité de détermination (404) configurée pour déterminer une première variation d'un réglage de température d'eau du chauffe-eau en fonction d'une valeur de différence de température entre la température ambiante de la journée en cours et la température ambiante de la journée précédente, et pour déterminer une deuxième variation du réglage de température d'eau du chauffe-eau en fonction de la quantité d'eau chaude utilisé par l'utilisateur la journée précédente ; et
une unité de calcul (402) configurée pour calculer le réglage de température d'eau du chauffe-eau pour la journée en cours en fonction de la première variation et de la deuxième variation ainsi que du réglage de température d'eau du chauffe-eau pour la journée précédente.

**9.** Dispositif selon la revendication 8, où la première variation est corrélée négativement à la valeur de différence de température.

**10.** Dispositif selon la revendication 9, où l'unité de détermination est spécifiquement configurée pour déterminer la première variation comme M1 lorsque la valeur de différence de température est inférieure à une première valeur de consigne ;
déterminer la première variation comme N1 lorsque la valeur de différence de température est supérieure ou égale à la première valeur de consigne et inférieure à une deuxième valeur de consigne ; et
déterminer la première variation comme P1 lorsque la valeur de différence de température est supérieure ou égale à la deuxième valeur de consigne,
dans lequel P1 < N1 < M1.

**11.** Dispositif selon la revendication 8, où la deuxième variation est corrélée positivement à la quantité d'eau chaude utilisée la journée précédente.

**12.** Dispositif selon la revendication 8, où, lorsque le chauffe-eau comporte un réservoir d'eau supportant la pression, et qu'une moitié supérieure du réservoir d'eau supportant la pression est munie d'un capteur de température, l'unité d'acquisition est spécifiquement configurée pour compter le nombre de fois qu'une valeur de température détectée par le capteur de température diminue à une vitesse supérieure ou égale à une vitesse prédéterminée pendant une période de temps prédéterminée de la journée précédente ; et
déterminer la quantité d'eau chaude utilisé par l'utilisateur la journée précédente en fonction du nombre de fois, dans lequel le nombre de fois est corrélé positivement à la quantité d'eau chaude utilisée par l'utilisateur la journée précédente.

**13.** Dispositif selon l'une quelconque des revendications 8 à 12, où l'unité de calcul est spécifiquement configurée pour calculer une valeur totale de la première variation et/ou de la deuxième variation ainsi que du réglage de température d'eau du chauffe-eau la journée précédente, comme le réglage de température d'eau du chauffe-eau pour la journée en cours.

**14.** Dispositif selon l'une quelconque des revendications 8 à 13, où la température ambiante de la journée en cours est la température ambiante la plus élevée de la journée en cours, et la température ambiante de la journée précédente est la température ambiante la plus élevée de la journée précédente ; ou
la température ambiante de la journée en cours est une température ambiante moyenne sur une période de temps prédéfinie de la journée en cours, et la température ambiante de la journée précédente est une température ambiante moyenne sur la période de temps prédéfinie de la journée précédente.

**15.** Chauffe-eau (500), comprenant un dispositif (400) pour le réglage d'une température d'eau pour un chauffe-eau selon l'une quelconque des revendications 8 à 14.

Start

Acquiring an ambient temperature of a current day and an ambient temperature of a previous day ⟋⟍ S10

Determining a first variation in a water temperature setting of the water heater according to a temperature difference value between the ambient temperature of the current day and the ambient temperature of the previous day ⟋⟍ S12

Calculating the water temperature setting of the water heater on the current day according to the first variation and the water temperature setting of the water heater on the previous day ⟋⟍ S14

End

Fig. 1

Start

Acquiring the amount of hot water used by a user on the previous day ⟋⟍ S20

Determining a second variation in the water temperature setting of the water heater according to the amount of hot water used by the user on the previous day ⟋⟍ S22

Calculating the water temperature setting of the water heater on the current day according to the second variation and the water temperature setting of the water heater on the previous day ⟋⟍ S24

End

Fig. 2

```
        ┌─────────┐
        │  Start  │
        └─────────┘
             │
             ▼
┌───────────────────────────────────────┐
│ Acquiring an ambient temperature of a  │    S30
│ current day and an ambient temperature │
│ of a previous day, and acquiring the   │
│ amount of hot water used by a user on  │
│ the previous day                       │
└───────────────────────────────────────┘
             │
             ▼
┌───────────────────────────────────────┐
│ Determining a first variation in a     │
│ water temperature setting of the water │
│ heater according to a temperature      │    S32
│ difference value between the ambient   │
│ temperature of the current day and the │
│ ambient temperature of the previous    │
│ day, and determining a second          │
│ variation in the water temperature     │
│ setting of the water heater according  │
│ to the amount of hot water used by the │
│ user on the previous day               │
└───────────────────────────────────────┘
             │
             ▼
┌───────────────────────────────────────┐
│ Calculating the water temperature      │
│ setting of the water heater on the     │    S34
│ current day according to the first     │
│ variation, the second variation and    │
│ the water temperature setting of the   │
│ water heater on the previous day       │
└───────────────────────────────────────┘
             │
             ▼
        ┌─────────┐
        │   End   │
        └─────────┘
```

Fig. 3

```
┌─────────────────────────────────────────┐
│  ┌────────────────────────────────────┐  │
│  │        Acquiring unit 402          │  │
│  └────────────────────────────────────┘  │
│  ┌────────────────────────────────────┐  │
│  │       Determining unit 404         │  │
│  └────────────────────────────────────┘  │
│  ┌────────────────────────────────────┐  │
│  │       Calculating unit 406         │  │
│  └────────────────────────────────────┘  │
│   Device 400 for setting water            │
│   temperature for water heater            │
└─────────────────────────────────────────┘
```

Fig. 4

```
┌─────────────────────────────────────────┐
│  ┌────────────────────────────────────┐  │
│  │ Device 400 for setting water       │  │
│  │ temperature for water heater       │  │
│  └────────────────────────────────────┘  │
│          Water heater 500                 │
└─────────────────────────────────────────┘
```

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006124629 A1
- WO 2009087811 A
- US 2015204580 A1